# EUROPEAN PATENT SPECIFICATION

(11) **EP 1 341 367 B1**
(45) Date of publication and mention of the grant of the patent: **31.12.2008**
(21) Application number: 03002229.7
(22) Date of filing: 31.01.2003
(51) Int. Cl.: H04N 1/00, H04N 1/44, G06F 12/14, G06F 1/00

(54) **Encryption of image data stored in a digital copier**
Verschlüsselung von in einem digitalen Kopierer gespeicherten Bilddaten
Chiffrage de données d'image stockées dans un copieur numérique

(30) Priority: 31.01.2002 US 59494
(43) Date of publication of application: 03.09.2003
(73) Proprietor: Xerox Corporation, Rochester, New York 14644 (US)
(72) Inventor: Hutchison, Ian, Broadstairs, Kent CT10 1BS (GB)
(74) Representative: Grünecker, Kinkeldey, Stockmair & Schwanhäusser Anwaltssozietät

(56) References cited:
- WO-A-93/15491
- GB-A- 2 322 216
- US-A- 5 633 932
- US-A- 5 642 199
- US-A- 5 771 101
- US-A1- 2001 056 543
- US-B1- 6 307 470

## Description

The present invention relates to digital copiers, and to systems in which original hard-copy data is scanned and recorded as digital data, for subsequent storing or printing.

"Digital copiers" are now common in the office equipment industry. Whereas traditional "analog" or "light-lens" copiers, available for many decades, in effect take a photograph of a hard-copy document desired to be copied, a digital copier first converts the original images to a set of digital data which is retained in a memory. At a later time, the digital data is used to print out copies based on the original documents; the copies can be exact copies of the original documents, or the data can be manipulated in various ways to create prints based on the original data. Temporary storage of the image data in memory provides an opportunity for the image data to be altered for various reasons, such as "cleaning up" the image; enlarging or reducing the image; shifting or inverting the image; inserting variable data, etc. The temporary storage of the data also facilitates exporting the image data from the copier in electronic form, such as for electronic archiving purposes.

The storage of digital data, and in particular the retaining of image data in memory after the data has been used, such as after printing, may present a security vulnerability. It is conceivable that such "abandoned" data relating to images that have been scanned, still resident in a memory within a digital copier, could be hacked and accessed by a hostile party, either by electronic means or even by physically taking the copier. The present invention relates to methods of protecting such data within a copier, or, more broadly, within any system in which image data is scanned and retained for subsequent printing.

US Patent US-A-5 629 981 discloses the use of RFID security badges in the context of office equipment such as copiers.

US Patent US-A-6 049 872 discloses a method for authenticating a channel in large-scale distributed systems.

"How PGP Works," from *Introduction to Cryptography*, © 1990-1999 Network Associates, Inc., describes various common methods of encrypting electronic data, including the method known as "Pretty Good Privacy" or PGP.

"Primer on Electronic Commerce and Intellectual Property Issues," World Intellectual Property Organization, Geneva, May 2000, pp. 79-84, discusses encryption techniques and concerns for electronic documents in the context of a large organization.

The Canon® imageRUNNER™ 5000 digital copier (as described in a Canon USA press release, December 5, 2001) includes a Secure Print function, in which a selected job in the print driver is printed out only upon entry of a user password. A Mail Box Printing function creates 100 security-coded mail boxes for storing print jobs and scanned documents.

US-A-5642199 discloses a digital copier with a facsimile function, provided with a security function for keeping a record of persons who copied or transmitted images, the dates of copying or transmission and the kinds of images in a manner which is not known to a third person. A scanned document image is electrically or magnetically recorded in a security unit removably mounted on the copier. A keyword, password or similar information identifying a person is input to the copier. The document image is recorded in the security unit together with the person's identification and the date and time when the scanner is used.

US-A-5771101 describes a data security system that envisages the identification of a pre-authorized user of data handling equipment and the storage of both the data processed by that user and the identification of the user, for subsequent accessing by security staff. Unless the user has been pre-authorized, the system will fail to activate even when identity has been established. In one embodiment image data representing a copied original and the identification of the user are stored.

WO-A-93/15491 discloses an apparatus for scrambling documents, which includes an apparatus for providing output signals representing the contents of a document, an apparatus for operating on the output signals to produce modified output signals representing a scrambled version of the document, and a writing apparatus receiving the modified output signals and producing a scrambled version of the document.

US-B-6307470 describes an antitheft apparatus, antitheft method and recording medium recording thereon an antitheft program. If a determining element comprised in the apparatus determines that a data processing apparatus has been taken out, an alarm is issued. At the next power up of the apparatus, the input of a password is requested, and the device is only powered up if the entered password is valid. Further, in the same case, ciphered confidential information stored in a file memory of the apparatus can only be deciphered after entering a valid password.

US-A-5633932 discloses a system and method for preventing a copy of a document to be output from a printing node until the printing node authenticates the intended recipient. The system includes a sending node, a printing node and a communication link coupling these nodes together in a network fashion. The sending node has access to a public key of the printing node and uses this public key to encrypt a header and document before transmission to the printing node over the communication link. The printing node has access to its private key to decrypt the header to ascertain whether the document requires authentication by the intended recipient before being output.

GB-A-2 322 216 describes an alarm device for a mains powered device like for example a computer. It will only operate and draw current from its own power source when the appliance is unplugged from a mains electricity supply and subsequently moved. The alarm device does not make any direct electrical connection to the piece of equipment, nor does it require to draw any power from the protected equipment to deactivate the alarm outputs of the alarm device. It includes a movement sensor and an antenna positioned close to the electrical power supply cord to the equipment to sense the flow of current in the cord.

US-A-2001/0056543 discloses a storage apparatus having a battery for supplying power upon removal from an equipment, a connection detecting unit for detecting the removal from the equipment, and an injustice judgement unit for judging whether a the removal is unjust or not. Upon unjust removal, a security processing unit performs an information protective action such as erasing of data of a storage unit, enciphering, saving into different areas etc. If the storage apparatus does not comprise batteries, the protective action is effected upon supply of external power at the time of reconnection.

US patent US-A-5 317304 discloses an anti-theft device and method having a motion sensor and an anti-tamper sensor, which are.coupled to a computer. When signals are sent to the computer, its software interprets the signals and generates an alarm when the computer determines that at least one of a plurality of predetermined values are met.

From US patent US-A-6026492, a computer system is known, which has a cable removal detector, that is coupled to the enclosure and is operatively connected with an erasable memory element for detecting a disconnection of the cable. Any stored security password can be cleared from the erasable memory element in response to any switching of the cable removal detector between the first state and second state.

It is an object of the present invention to provide an improved method of protecting data within a copier.

The object is achieved by a method according to claim 1. Advantageous embodiments are subject matter of the dependent claims.
Figure 1 is a simplified elevational view of a digital copier and an associated computer, showing the essential elements thereof relevant to the present invention.
Figure 2 is a diagram of a set of digital copiers and associated computers arranged on a network, showing an embodiment of the present invention.

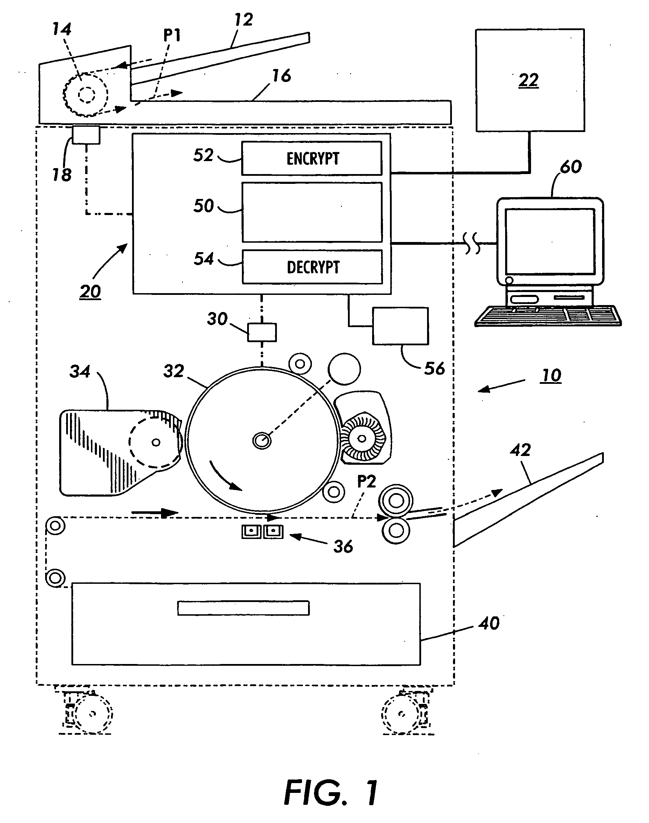

Figure 1 is a simplified elevational view of a digital copier and an associated computer, showing the essential elements thereof relevant to the present invention. Although the Figure shows the scanning and printing functions of a digital copier 10 within a single "box," it is conceivable that the present invention can be embodied in a combination of separate devices, such as a standalone scanner, general-purpose computer, and network-controlled printer. One or more such copiers 10 can in turn be interconnected to any number of computers, and/or to each other, using known network protocols and systems; the invention could also be directed to a context including a facsimile machine. Original sheets, bearing images to be copied, are placed on an input tray 12, where they are automatically fed by generally known means such as a document handler including a constant-velocity transport (CVT) roll 14, and then placed in catch-tray 16. While each sheet is moved on CVT roll 14 through what can be called a scanner process direction P1, successive small areas on the sheet are illuminated and recorded by a linear photosensor array 18, which may be of any type known in the art such as a charge-coupled device (CCD) or CMOS device, along with appropriate optics (not shown), which converts the light reflected by the small areas into digital data. The array 18 may also be used for exposure of images on sheets which are placed on a platen, in a manner familiar in the art.

The resulting digital data relating to all the images in a job to be copied is retained in what is here called a "computer" 20, which in a practical embodiment is a board comprising any number of processors, memory devices, etc., as is generally familiar in digital copiers. The computer 20 retains image data collected in the scanning process, and holds it temporarily until the image data is used to print copies. The computer may also be associated with a user interface (UI) 22 at the copier to receive instructions, such as through a touchscreen (not shown), or to accept physical items bearing digital data for any purpose, such as magnetic-stripe cards, wireless ID devices, or "smart cards," as is familiar in the art.

In a digital copier using a xerographic "laser printer" to create images, the computer 20 ultimately operates hardware including a laser 30 which is used to discharge areas on a photoreceptor 32 in accordance with a page image desired to be printed (laser 30 could also be in the form of an LED array). The resulting electrostatic latent image is then developed with marking material at developer station 34. Blank sheets are then drawn one at a time from a stack 40 and moved through process direction P, and the marking material on the photoreceptor 32 is transferred to each sheet at transfer station 36. The output prints are then deposited in a tray 42, which may have associated therewith any number of finishing devices such as a stapler or folder (not shown).

Although the printer elements shown in Figure 1 are xerographic or more broadly electrostatographic, other types of digital printing technology are of course also useable, such as ink-jet.

Various programs running within computer 20, as is generally known in the art, can perform certain basic image-manipulation operations on image data between the recordation thereof by array 18 and the digital output thereof through laser 30. For instance, known software techniques can be performed on the image data to effect a magnification or reduction of the original image in the images on the output sheets; the original images can be "cleaned up" in various ways through image processing algorithms; multiple original images can be printed 2-up or 4-up on each output sheet, such as for booklet making; the image data from hard-copy originals can be combined with variable data (such as addresses) originating from an external computer, etc.

The computer 20 on board the copier 10 includes what is here generally called a memory 50. This memory 50, which may in a practical embodiment include any number of memory chips and associated circuitry and software, retains image data (in compressed or uncompressed form, in some predetermined format) from original images from the scanner hardware, until the data is caused to operate the printer hardware to output prints.

With particular reference to the invention, there is provided, associated with memory 50, what is here called an "encrypt" device 52 and a "decrypt" device 54. The devices 52, 54 may be embodied within chips designed for the purpose, or could exist as software within the general functions of computer 20. As can be seen, the encrypt device 52 encrypts image data entering the memory 50 from the scanner hardware, and decrypt device 54 decrypts the data in memory 50 so that it may be used to output prints. The effect is that all image data, in whatever format, retained in memory 50 is encrypted.

As generally described in the article referenced above, most common encryption methods involve using some sort of encryption "key," which is basically a number, in combination with an encryption algorithm which is applied to the data, yielding encrypted data. To decrypt the data, the key (or a special decryption key, which is related to the encryption key) is used in combination with a decryption algorithm. According to various generally-known techniques, these keys may be "public" or "private": generally, while a public key can be used to encrypt data, a private key may be required to decrypt it. In particular, the method known as "Pretty Good Privacy" or "PGP" uses a "session key" which is a one-time-only symmetric private key, which is itself encrypted using a public key and sent to a recipient. In PGP as commonly practiced, digital data to be encrypted is itself encrypted with a session key, and then the session key is itself encrypted with a public key.

Another aspect of encryption alluded to in the article cited above is the use of "incidental" data as an aid in random number generation, such as could be used as keys at various times. In the PGP example, the incidental keyboard strokes and mouse movements by a human user are used to help generate random numbers for a particular session key. In the copier context, other sources of incidental data present themselves as well: for instance, any entry into a user interface for whatever reason, such as a job account number; the number of sheets scanned in the current or a previous job; the duration or time of day of scanning the current or a previous job; the size of a paper stack in a tray; etc., or a combination of these incidental data. Also, the fact each job may contain a plurality of page images facilitates a system whereby each page image in a job is assigned a different key, the different keys possibly being derived from different types of incidental data.

For various security requirements, different uses of keys may be carried out according to the invention. In the most basic case, a single key is used to encrypt data entering memory 50, and then to decrypt it incidental to printing. This will have the effect of encrypting all the data in memory 50. For more security, each job in memory, and perhaps even each page image in memory, can be assigned a different key, and these keys can be generated either by a random-number generator associated with computer 20 and/or some incidental data accessible to computer 20.

Another strategy is to retain all keys, or at least all necessary private keys, retained external to a particular copier 10, so that, if the copier 10 is stolen or otherwise inappropriately accessed, the keys will not be resident in the machine. Thus, an external computer 60, which communicates through a secure connection to the copier 10, can maintain a list (which may itself be encrypted) of keys for every job or page image in memory 50. The computer 60 may further keep track of keys as they relate to various human users who identify themselves (such as by entering passwords, ID numbers, or matter numbers) to particular copiers 10 at various times. The external computer may also serve as a source of incidental data (keystrokes, mouse clicks, etc., or incidental data from computers or copiers elsewhere on the network) from which keys can be derived. Alternately, a key could reside on a "smart card" or equivalent device which is retained by a human user and in effect read through, for instance, user interface 22 when the user walks up to the copier 10; in such a case, the user may also be required to enter a password which is consistent with his smart card.

In one alternative, Pretty Good Privacy (PGP) is the basic encryption technique used in copier 10: in brief, the scanner acts as a sender and the printer acts as the recipient. Using PGP, the original data (as recorded by the scanner from scanned hard-copy images) is compressed according to any one of known techniques, such as LZ compression or its variants; as it happens, this is a typical step in digital copying anyway. The compression not only reduces the amount of data that must be encrypted, but also would confound many straightforward cryptological attack techniques. PGP then creates the session key, which is a random number typically derived from incidental data, such as keystrokes to UI 22, the behavior of feeders and paper trays, etc., as described above. A session key can alternately be created using the input of a "smart card" or similar device via UI 22. The session key is used with an algorithm to encrypt the data from the scanner hardware, yielding encrypted image data. Once the image data is encrypted, the session key is then encrypted using a public key, resulting in a public-key-encrypted session key. Incidental to printing, the copier uses a private key to recover the session key, which is then used to decrypt the image data stored in memory 50.

In a PGP aspect, different keys could be retained at different locations and exploited in different ways as desired. First, the public key used to encrypt the data may reside within computer 20 within copier 10, or can reside in an external computer 60, and would never be retained in a copier 10. The public key used may relate to an identified user who enters, as part of a copying job, a login code, security password, account identification, or network password in UI 22: indeed, different passwords or other identifications may invoke the use of different public keys. (In a sense, an entered password or other identification is a type of incidental data useful in random number generation.)

As for the private key necessary for decryption, similarly, such private keys could be invoked by entry of a suitable password or identification at UI 22, i.e., only a "correct" code would provide access to a private key, without which copying would be impossible. Even if a login or other security code (possibly in combination with entry of a smart card or other physical token) is entered at a copier 10, the actual invoked private key may reside elsewhere, such as at an external computer 60.

The session keys, which are unique to every "session," can be created at every new copying job, or with every scanned page image even within a job, or can relate to a time of day or other incidental data.

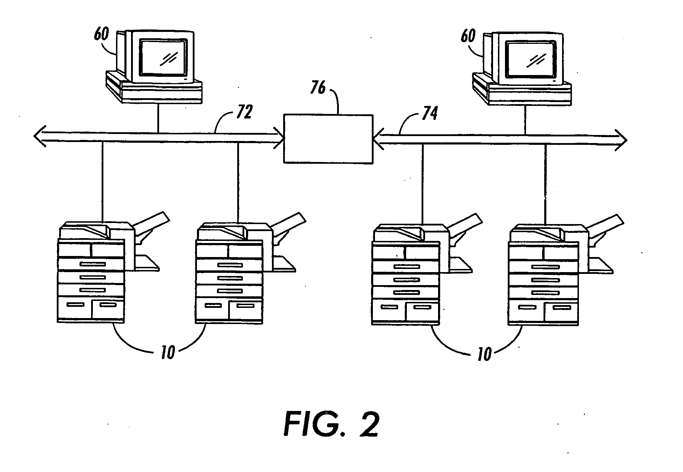

With regard to external computer 60, such a computer, which may in fact be embodied in multiple computers and servers, may be provided by an independent arbiter, such as a trusted vendor who is independent of the owners or lessors of one or more copiers 10. Figure 2 is a diagram of a set of digital copiers and associated computers arranged on a network. In Figure 2, a plurality of digital copiers 10 are connected, through known means such as one or more sub-networks 72, 74 connected through a router 76, to one or more computers 60, which can each retain keys for whatever purpose for copiers on its own sub-network or another sub-network.

External computer 60 may run an ongoing tally of all jobs or individual page images in all copiers associated therewith, maintaining the necessary decryption keys (such as session keys) and sending or otherwise invoking decryption keys as necessary. As such the ongoing tally of decryption keys may be retained in the computer 60 itself in encrypted form.

Another function of an independent arbiter controlling a computer 60 is to provide emergency services when a security breach has occurred or detected, or is suspected by a human operator (generally speaking, when an "alert" occurs). Returning to Figure 1, a copier 10 can further be provided with a location device 56, which may be in the form of an RF identification badge, GPS-compatible device, or some other known device which can react to a change in physical location of the copier 10. Such a device 56 interacts with computer 20 to signal a change in physical location possibly consistent with a security breach, e.g., a person trying to steal copier 10. In response to such an alert, it is important to prevent access to or dissemination of encrypted data, such as could be stored in any copier 10 on a network, so that it cannot be decrypted in an unauthorized manner. There are several general approaches to this problem, and a specific implementation may include one or more aspects of the following approaches:
a) In the event of an alert, one or more copiers, such as defined by physical location or presence on a certain network or sub-network, have the contents of their memories 50 made inaccessible (such as by causing hardware associated with the memory 50 to be disabled) or in effect erased (such as by overwriting data on the files). This can be initiated on a network basis by having a control computer 60 send to one or more selected copiers 10 a special instruction code, which each copier is programmed to respond to. For an individual copier 10, an alert can be initiated when an unanticipated network disruption occurs, or its location device 56 determines that the copier 10 is being moved. In a network context, a detected or suspected security breach at one copier 10 can trigger an alert involving, for example, all copiers sharing the same sub-network, or all copiers in a predetermined physical relationship to the affected copier, such as all other copiers on the same floor or in the same building.
b) If all data is crucial to be retained, the contents of the memories of the copiers can be transferred to a special repository controlled by, or even resident in, control computer 60, which would also segregate (i.e., identify and keep track of) the keys of files entering the repository, before erasing the memories. The files can then be accessed from the repository and decrypted under more secure conditions. The repository can be controlled by the independent arbiter, and may itself be protected by various forms of "firewall," such as could be put into place with a router such as 76.
c) In choosing to erase or transfer data from a memory 50 in a copier 10 in response to an alert, there may be discrimination. For example, a system in the computer can be designed to not erase files associated with a print job in progress; or will choose to erase only files associated with certain sensitive users (as determined by any login or smart card features associated with various job data) or jobs which users have in some manner indicated as sensitive. To save resources, files in a copier 10 which are, by an algorithm, determined to be "too old" may be simply erased without being transferred to the repository.
d) When a copier 10 is removed from a network, there may be provided a security procedure, such as entry of a password into a control computer 60. If the procedure is not followed, the keys for any jobs within the copier 10 which is illegally removed can be erased from computer 60, or otherwise segregated (such as by sending to another computer) for special treatment.
e) Another strategy against physical taking of a copier 10 is to cause the entire memory 50 to be erased in the event of unauthorized removal of the copier from the network, or even removal of the copier from a certain defined physical area (as can be enforced, for example, by using a RF tag, or GPS system associated with the copier). This erasure process can be initiated by re-power-up of the board containing memory 50 (but, of course, could be avoided by entry of a password or other procedure at power up).

Other security strategies in digital copiers are listed below.

According to one strategy, the image data comprises a plurality of page images, and the encrypting step may include assigning a new encryption key to each page image in the memory.

According to another strategy the method may further comprise generating at least one session key with each job scanned into the memory.

According to a further strategy at least one session key with each job scanned into the memory is generated, and the step of generating may include using incidental data.

According to still another strategy the step of generating may include using incidental data that relates to a physical attribute of a scanning operation.

According to yet another strategy , the encrypting step of the digital copier operation may include encrypting the data with a private key associated with a user.

According to yet a further strategy the step of encrypting may further comprise decrypting the data with a public key.

According to a further strategy the method may further comprise retaining a plurality of keys, wherein each key may be associated with a job in the memory.

According to still another strategy the method may further comprise retaining a plurality of keys, wherein each key may be associated with a page image in the memory.

According to still a further strategy the method may further comprise generating a key incidental to a scanning operation performed on the digital copier; and encrypting data from the scanning operation with the key.

According to yet another strategy the method may further comprise generating a key, wherein the key may be a session key.

According to another strategy , the method may further comprise in response to an alert, transferring data from the memory to an external repository.

According to still another strategy the alert may be initiated at a computer external to the copier, wherein said computer may send a signal communicating an alert over a network to the copier.

According to still a further strategy the alert may be initiated at a computer external to the copier, wherein the computer may send a signal communicating an alert to a plurality of copiers.

## Claims

1. A method of operating a digital copier (10), the digital copier (10) including a scanner (18) for recording image data, a memory (50) for retaining image data, and a printer (30, 32) for printing an image based on the image data on a print sheet, said method comprising the step of:
in response to an alert caused by a security breach, causing data in the memory (50) to become substantially inaccessible,
wherein at least part of the data in the memory (50) is encrypted, on writing into, and decrypted on reading from said memory (50),
wherein keys associated with the encryption of the data are stored in a computer (60) separate from the digital copier (10), and
wherein said keys are subjected to a security procedure in response to said alert, thereby rendering said data substantially inaccessible.

2. The method of claim 1, further comprising in response to said alert, causing data in the memory to be effectively erased.

3. The method according to claim 2, wherein data associated with a print job in progress is not erased.

4. The method according to claim 2, wherein only data associated with pre-determined users-is erased.

5. The method of claim 1, further comprising in response to said alert, causing data in the memory to be transferred out of the memory.

6. The method of claim 1, wherein said keys are erased from said control computer in response to said alert.

7. The method of claim 1, wherein said keys are sent from said control computer to another computer in response to said alert.

8. The method of one of the preceding claims, wherein the alert is initiated at a computer external to the copier.

9. The method of any of the claims 1 to 7, wherein the alert is initiated when a sensor in the copier detects that the copier has been moved.

10. The method of any of the claims 1 to 7, wherein the alert is initiated when an unanticipated network disruption occurs.

## Patentansprüche

1. Verfahren zum Betreiben eines digitalen Kopierers (10), wobei der digitale Kopierer (10) einen Scanner (18) zum Aufzeichnen von Bilddaten, einen Speicher (50) zum Speichern von Bilddaten und einen Drucker (30, 32) zum Drucken eines Bildes basierend auf den Bilddaten auf einem Druckbogen umfasst und wobei das Verfahren den folgenden Schritt umfasst:
in Antwort auf eine Warnmeldung, die durch einen Sicherheitsbruch verursacht wird, Veranlassen, dass die Daten in dem Speicher (50) im Wesentlichen unzugänglich werden,
wobei mindestens ein Teil der Daten in dem Speicher (50) beim Einschreiben verschlüsselt wird und beim Lesen aus dem Speicher (50) entschlüsselt wird,
wobei Chiffrierschlüssel, die mit der Verschlüsselung der Daten in Verbindung stehen, in einem Computer (60) getrennt von dem digitalen Kopierer (10) gespeichert sind, und
wobei die Chiffrierschlüssel in Antwort auf die Wammeldung einer Sicherheitsprozedur unterworfen werden, wodurch die Daten im Wesentlichen unzugänglich gemacht werden.

2. Verfahren gemäß Anspruch 1, weiterhin umfassend, in Antwort auf die Wammeldung, Verursachen, dass die Daten in dem Speicher wirksam gelöscht werden.

3. Verfahren nach Anspruch 2, wobei Daten, die mit einem in Bearbeitung befindlichen Druckauftrag in Verbindung stehen, nicht gelöscht werden.

4. Verfahren nach Anspruch 2, wobei nur Daten, die mit vorbestimmten Benutzem in Verbindung stehen, gelöscht werden.

5. Verfahren nach Anspruch 1, weiterhin umfassend, in Antwort auf die Wammeldung, Verursachen, dass Daten in dem Speicher aus dem Speicher hinaustransferiert werden.

6. Verfahren nach Anspruch 1, wobei die Chiffrierschlüssel in Antwort auf die Wammeldung aus dem Steuercomputer gelöscht werden.

7. Verfahren nach Anspruch 1, wobei die Chiffrierschlüssel von dem Steuercomputer in Antwort auf die Wammeldung an einen weiteren Computer gesendet werden.

8. Verfahren nach einem der vorhergehenden Ansprüche, wobei die Wammeldung in einem Computer, der sich außerhalb des Kopierers befindet, ausgelöst wird.

9. Verfahren nach einem der Ansprüche 1 bis 7, wobei die Wammeldung ausgelöst wird, wenn ein Sensor in dem Kopierer detektiert, dass der Kopierer bewegt wurde.

10. Verfahren nach einem der Ansprüche 1 bis 7, wobei die Wammeldung ausgelöst wird, wenn eine nicht vorhergesehene Netzwerkunterbrechung auftritt.

## Revendications

1. Procédé d'exploitation d'un copieur numérique (10), le copieur numérique (10) incluant un dispositif de balayage (18) pour enregistrer des données d'image, une mémoire (50) pour retenir des données d'image, et une imprimante (30, 32) pour imprimer une image sur la base des données d'image sur une feuille d'impression, ledit procédé comprenant l'étape consistant à:
en réponse à une alerte provoquée par une atteinte à la sécurité, amener des données dans la mémoire (50) à devenir essentiellement inaccessibles,
où au moins une partie des données dans la mémoire (50) est cryptée, lors de l'écriture dans, et décryptée lors d'une lecture à partir de ladite mémoire (50), où des clés associées au cryptage des données sont stockées dans un ordinateur (60) séparé du copieur numérique (10), et
où lesdites clés sont soumises à une procédure de sécurité en réponse à ladite alerte, rendant ainsi lesdites données essentiellement inaccessibles.

2. Procédé de la revendication 1, comprenant en plus en réponse à ladite alerte, le fait d'amener les données dans la mémoire à être effectivement effacées.

3. Procédé selon la revendication 2, dans lequel des données associées à un travail d'impression en cours ne sont pas effacées.

4. Procédé selon la revendication 2, dans lequel seules les données associées à des utilisateurs prédéterminés sont effacées.

5. Procédé de la revendication 1, comprenant en plus en réponse à ladite alerte, le fait d'amener les données dans la mémoire à être transférées hors de la mémoire.

6. Procédé de la revendication 1, dans lequel lesdites clés sont effacées dudit ordinateur de commande en réponse à ladite alerte.

7. Procédé de la revendication 1, dans lequel lesdites clés sont envoyées dudit ordinateur de commande à un autre ordinateur en réponse à ladite alerte.

8. Procédé de l'une des revendications précédentes, dans lequel l'alerte est initiée au niveau d'un ordinateur externe au copieur.

9. Procédé de l'une des revendications 1 à 7, dans lequel l'alerte est initiée lorsqu'un capteur dans le copieur détecte que le copieur a été déplacé.

10. Procédé de l'une des revendications 1 à 7, dans lequel l'alerte est initiée lorsqu'une interruption imprévue de réseau se produit.
